Europäisches Patentamt

European Patent Office

Office européen des brevets

(19)

(11) Publication number: **0 218 351 B1**

# EUROPEAN PATENT SPECIFICATION

(12)

(45) Date of publication of patent specification: **06.11.91**    (51) Int. Cl.⁵: **C02F 5/14**, C23F 11/173, C08F 30/02

(21) Application number: **86306589.2**

(22) Date of filing: **26.08.86**

(54) Acrylic acid/2-acrylamido-2-methylpropylsulphonic acid/2-acrylamido-2-methylpropyl phosphonic acid polymers and their use as scale and corrosion inhibitors.

(30) Priority: **29.08.85 US 770458**
**30.08.85 US 771079**

(43) Date of publication of application:
**15.04.87 Bulletin 87/16**

(45) Publication of the grant of the patent:
**06.11.91 Bulletin 91/45**

(84) Designated Contracting States:
**AT BE CH DE FR GB IT LI LU NL SE**

(56) References cited:
**EP-A- 0 132 630**

(73) Proprietor: **CALGON CORPORATION**
**Route 60-Campbell's Run Road**
**Robinson Township Pennsylvania 15205(US)**

(72) Inventor: **Boothe, Jerry E.**
**221 Disney Drive**
**Coraopolis Pennsylvania 15108(US)**
Inventor: **Schaper, Raymond J.**
**2 Tiffin Drive**
**Pittsburgh Pennsylvania 15209(US)**

(74) Representative: **Crampton, Keith John Allen et al**
**D. YOUNG & CO. 10 Staple Inn**
**London WC1V 7RD(GB)**

## Description

U.S. Patent Specification US-A-3,928,196 discloses the use of a copolymer of 2-acrylamido-2-methyl-propylsulphonic acid (hereinafter "AMPS") and acrylic acid in inhibiting scale.

Published European Patent Specification EP-A-0 089 654 discloses copolymers of 2-acrylamido-2-methylpropyl phosphonic acid (hereinafter "AMPPA") and acrylamide or acrylic acid as scale inhibitors.

Published European Patent Specification EP-A-0 132 630 discloses inter alia polymers containing the AMPPA or methAMPPA residue and obtainable from 1 to 99 wt % of the free AMPPA or methAMPPA or a salt thereof and 99 to 1% of an ethylenically unsaturated compound such as acrylic acid, methacrylic acid or 2-acrylamido-2-methylpropane-1-sulphonic acid.

Most industrial waters contain alkaline-earth metal cations, such as those of calcium, barium and magnesium, and several anions such as bicarbonate, carbonate, sulphate, oxalate, phosphate, silicate and fluoride. When combinations of these anions and cations are present in concentrations that exceed the solubility product of the corresponding salts, precipitates form until these solubility products are no longer exceeded. For example, when the concentrations of calcium ion and carbonate ion are such that the solubility product of calcium carbonate is exceeded, a solid phase of calcium carbonate will form.

Solubility product concentrations are exceeded for various reasons, such as partial evaporation of the aqueous phase, change in pH, pressure or temperature, and the introduction of additional ions that form insoluble compounds with the ions already present in the solution.

As these reaction products precipitate on surfaces of a water-carrying system, they form scale or deposits. This accumulation prevents effective heat transfer, interferes with fluid flow, facilitates corrosive processes, and harbours bacteria. This scale is an expensive problem in many industrial water systems causing delays and shutdowns for cleaning and removal.

Precipitation of scale-forming compounds can be prevented by inactivating their cations with chelating or sequestering agents, so that the solubility product is not exceeded. Generally, this requires many times as much chelating or sequestering agent as cation, since chelation is a stoichiometric reaction, and these amounts are not always desirable or economical.

Almost fifty years ago, it was discovered that certain inorganic polyphosphates would prevent such precipitation when added in amounts far less than the concentrations needed for sequestering or chelating.

When a precipitation inhibitor is present in a potentially scale-forming system at a markedly lower concentration than that required for sequestering (stoichiometric) the scale-forming cation, it is said to be present in "threshold" amounts. See for example, Hatch and Rice, "Industrial Engineering Chemistry", Vol. 31, pages 51 to 53 (Jan. 1939); Reitemeier and Buehrer, "Journal of Physical Chemistry", Vol. 44, No. 5, pages 535 to 536 (May 1940); and U.S. Patent Specifications US-A-2,358,222 and US-A-2,539,305.

Generally, sequestering takes place at a weight ratio of threshold active compound to scale-forming cation components of greater than 10:1, depending on the anionic components in the water. Threshold inhibition usually takes place at a weight ratio of threshold active compound to scale-forming cation components of less than 0.5:1.0.

Certain water-soluble polymers, including those containing groups derived from acrylamide and acrylic acid, have been used to condition water containing scale-forming compounds. For example, see U.S. Patent Specifications US-A-2,783,200; 3,514,476; 2,980,610; 3,285,886; 3,463,730 and 3,518,204.

The present invention provides a polymer having an intrinsic viscosity of 0.05 to 4.5 dl/g, in 1.0 M NaCl, prepared from 35 to 65%, preferably 40 to 60%, by weight of acrylic acid or methacrylic acid, preferably acrylic acid; 15 to 45%, preferably 20 to 40%, by weight of 2-acrylamido-2-methylpropylsulphonic acid (hereinafter "AMPS") or 2-methacrylamido-2-methylpropylsulphonic acid, preferably AMPS; and 15 to 25%, preferably 20%, by weight, 2-acrylamido-2-methylpropyl phosphonic acid (hereinafter "AMPPA") or 2-methacrylamido-2-methyl-propylphosphonic acid. Terpolymers are preferred. AMPPA may be prepared as described in U.S. Patent Specification US-A-4,526,728.

It has been found that polymers of the present invention are effective corrosion and scale inhibitors, in particular, in inhibiting calcium phosphate and calcium carbonate scale.

The present invention also provides a method of inhibiting corrosion and the precipitation of scale-forming salts in an aqueous system, comprising adding to the system at least 0.1 mg/l and preferably 1 to 100 mg/l of a polymer in accordance with the invention.

The phrase "scale-forming salts" includes but is not limited to calcium carbonate, calcium sulphate, calcium phosphate, calcium phosphonate (including calcium hydroxyethylidene diphosphonic acid), calcium oxalate and barium sulphate.

Calcium phosphate scale is a particular problem at a pH of 7 to 9. The polymers used in accordance with the present invention were surprisingly found to be effective at a pH 7 to 9 and at temperatures ranging

EP 0 218 351 B1

from 0 to 80°C.

The polymers of the invention may be prepared by mixing the monomers, preferably in the presence of a free-radical initiator. Any free-radical initiator may be used. Examples include peroxides, azo initiators and redox systems. The polymerization may also be initiated photochemically. The preferred catalysts are sodium persulfate and mixtures of ammonium persulphate and an azo type initiator, such as 2,2'-azobis-(2,4-dimethyl-4-methoxyvaleronitrile).

The polymerization may be conducted by any of a variety of procedures, for example, in solution, suspension, bulk or emulsion.

The reaction temperature is not critical. The reaction will generally occur between 10 and 100°C, preferably 40 to 60°C. It is generally impracticable to carry it out below room temperature because the reaction is too slow. Above 60°C, the molecular weight of the polymer tends to decrease. The reaction, depending on the temperature, usually takes from 1 to 12 hours. Measuring for residual monomer will verify when the reaction is complete.

The pH of the reaction mixture and percentage of solids in the raction mixture are not critical. The pH is usually in the range 3.5 to 9.0 and the preferred percentage of solids is 1 to 50% by weight.

The molecular weight of polymers is difficult to measure accurately. The polymers are, instead, usually identified by intrinsic viscosity. The intrinsic viscosity of the polyampholyte is critical in the present invention. The intrinsic viscosity should be 0.05 to 4.5, preferably 0.5 to 2.5 dl/g, in 1.0 $\underline{M}$ sodium chloride (measured on a 75 Cannon Ubbelohde capillary viscometer).

The polymers of the present invention may be used in combination with other scale inhibitors (in particular, phosphonates) or with other corrosion inhibitors (in particular, zinc).

The following Examples illustrate the invention. Certain Examples give comparative data.

EXAMPLES 1 AND 2

Polymers of the examples were produced by mixing the monomers indicated in Table 1, in the amounts, solids concentration, initial temperatures and pH indicated. The monomer mix was purged with nitrogen for one hour. The solvent was deionized water. The initiator was added and the components allowed to react for about 3 hours.

3

**TABLE I**

| Example | Monomers | Wt% | Initiator | Solids | pH | Temp. | $[\eta]^6$ |
|---------|----------|-----|-----------|--------|----|-------|------|
| 1 | AA[1]/AMPS[2]/AMPPA[3] | 60/20/20 | 1.1% SPS[4]/ 1.7% NaHSO$_3$[5] | 28% | 4.4 | 25°C | 0.21 |
| 2 | AA/AMPS/AMPPA | 40/40/20 | 1.1% SPS/ 1.7% NaHSO$_3$ | 28% | 4.4 | 25°C | 0.11 |

[1]AA = acrylic acid
[2]AMPS = 2-acrylamido-2-methylpropylsulphonic acid
[3]AMPPA = 2-acrylamido-2-methylpropyl phosphonic acid
[4]SPS = sodium persulphate
[5]NaHSO$_3$ = sodium bisulphite
[6]dl/g in 1.0 M NaCl, measured in a 75 Cannon Ubbelohde capillary viscometer

EXAMPLES 3 TO 7

Various polymers were screened for threshold inhibition of calcium carbonate and calcium phosphate. Stagnant flask tests were used with solutions stored for 24 hours at constant temperature. The standard test conditions used were as follows:

4

|  | Calcium Carbonate | Calcium Phosphate |
|---|---|---|
| Calcium, mg/l | 200 | 200 |
| Bicarbonate, mg/l | 600 | --- |
| Phosphate, mg/l | --- | 9 |
| pH | 8.0 | 8.5 |
| Temperature, °C | 60 | 60 |

Two flasks were used for each test; one for a control (no inhibitor) and one with the polymer. The percent inhibition was determined by the following equation:

$$\text{Percent Inhibition} = \frac{S_T - S_c}{S_I - S_c} \times 100$$

where:

$S_I$ = level of test species initially;

$S_c$ = level of test species at end of control test; and

$S_T$ = level of test species at end of inhibitor test.

Calcium was used as the test species in the calcium carbonate and phosphate was the test species in the calcium phosphate test. The results are summarized in Table II.

TABLE II

Scale Inhibition Performance Results

| Example | Composition | [η] dl/g | CaCO$_3$ (pH = 8.0) | | | Ca/PO$_4$ (pH = 8.5) | | | |
|---|---|---|---|---|---|---|---|---|---|
| | | | at 1 mg/l | at 2 mg/l | at 4 mg/l | at 5 mg/l | at 6 mg/l | at 8 mg/l | at 10 mg/l |
| 3* | 60/40 AA[1]/AMPS[2] | 0.2 | 74 | 76 | 80 | 1 | 71 | 100 | – |
| 4* | 60/40 AA/AMPPA[3] | 0.18 | 71 | – | 100 | 0 | 0 | 6 | 13 |
| 5* | 40/40/20 AA/AMPS/AM[4] | 0.10 | 44 | 50 | 31 | 38 | 95 | 99 | 100 |
| 6 | 60/20/20 AA/AMPS/AMPPA (Example 1) | 0.21 | 81 | 100 | 100 | 2 | 15 | 100 | 100 |
| 7 | 40/40/20 AA/AMPS/AMPPA (Example 2) | 0.11 | 76 | 82 | 80 | 90 | 98 | 100 | – |

*Comparison Examples

[1] AA = acrylic acid

[2] AMPS = 2-acrylamido-2-methylproplsuphonic acid

[3] AMPPA = 2-acrylamido-2-methylpropyl phosphonic acid

[4] AM = acrylamide

EP 0 218 351 B1

## TABLE III

### Scale Inhibition Performance Results

| Example | Composition | [η] dl/g | CaCO$_3$ (pH = 8.8) | | | | Ca/CO$_3$ (pH = 9.0) | | | |
|---|---|---|---|---|---|---|---|---|---|---|
| | | | at 5 mg/l | at 10 mg/l | at 20 mg/l | at 30 mg/l | at 20 mg/l | at 30 mg/l | at 40 mg/l | at 50 mg/l |
| 8 | 60/20/20 AA[1]/AMPS[2]/AMPPA[3] (Example 1) | 0.21 | 47 | 50 | 69 | 65 | 51 | 59 | 59 | 64 |
| 9 | 40/40/20 AA/AMPS/AMPPA (Example 2) | 0.11 | -- | -- | -- | -- | 36 | 46 | 49 | 45 |

[1] AA = acrylic acid

[2] AMPS = 2-acrylamido-2-methylpropylsuphonic acid

[3] AMPPA = 2-acrylamido-2-methylpropyl phosphonic acid

### Test Conditions

250 mg/l Ca$^{++}$ and 600 mg/l HCO$_3^-$, CO$_3^{-2}$

55°C, 24 hours, Whatman 42 filter paper

## TABLE IV

### Corrosion Rates for Carbon Steel in 4x Tap Water
### (pH = 7.5; 50°C; linear polarization)

| Example | Composition (concentration, mg/l) | Corrosion Rate (mpy) |
|---|---|---|
| 10 | Blank | 26.8 ± 5.7 |
| 11 | 60/20/20 AA/AMPS/AMPPA (15) | 8.83 ± 0.67 |
| 12 | 60/20/20 AA/AMPS/AMPPA (15) + Zn (5) | 6.54 ± 1.80 |
| 13 | 40/40/20 AA/AMPS/AMPPA (15) | 9.05 ± 0.85 |
| 14 | 40/40/20 AA/AMPS/AMPPA (15) + Zn (5) | 7.73 ± 1.21 |

## TABLE V

### Admiralty 443 Corrosion Rates
Conditions:  4x Water, pH = 8.5,
Temp. = 50°C, 7 day immersion

### 40/40/20 AA/AMPS/AMPPA (Example 2)

| Example | Treatment Level mg/L Active | Corrosion Rate mpy | Percent Corrosion Reduction |
|---|---|---|---|
| 15 | 0 | .52 | 0 |
| 16 | 1.0 | .0645 | 87.6 |
| 17 | 10.0 | .0733 | 86.0 |
| 18 | 30.0 | .3633 | 30.1 |

## TABLE VI

### Admiralty 443 Corrosion Rates
Conditions:  3% NaCl, pH = 7.0, Room Temp.,
7 day immersion

### 40/40/20 AA/AMPS/AMPPA (Example 2)

| Example | Treatment Level mg/L Active | Corrosion Rate mpy | Percent Corrosion Reduction |
|---|---|---|---|
| 19 | 0 | 7.06 | 0 |
| 20 | 2 | 5.736 | 18.8 |
| 21 | 10 | 4.834 | 31.6 |

## Claims

**Claims for the following Contracting States: BE, CH, DE, FR, GB, IT, LI, LU, NL, SE**

1. A polymer having an intrinsic viscosity of 0.05 to 4.5 dl/g in 1.0 M NaCl and prepared from:
   (A) 35 to 65% by weight of acrylic acid or methacrylic acid;
   (B) 15 to 45% by weight of 2-acrylamido-2-methyl-propylsulphonic acid or 2-methacrylamido-2-methyl-propylsulphonic acid; and
   (C) 15 to 25% by weight of 2-acrylamido-2-methyl-propyl phosphonic acid or 2-methacrylamido-2-methylpropylphosphonic acid.

2. A polymer as claimed in Claim 1, prepared from acrylic acid, 2-acrylamido-2-methylpropylsulphonic acid and 2-acrylamido-2-methyl-propyl phosphonic acid.

3. A polymer as claimed in Claim 2, prepared from 40 to 60% by weight of acrylic acid; 20 to 40% by weight of 2-acrylamido-2-methylpropylsulphonic acid; and 15 to 25% by weight of 2-acrylamido-2-methylpropyl phosphonic acid.

4. A polymer as claimed in any preceding claim having an intrinsic viscosity of 0.05 to 2.5 dl/g, in 1.0 M NaCl.

5. A method of inhibiting corrosion and the precipitation of scale-forming salts in an aqueous system, comprising adding to the system at least 0.1 mg/l of a polymer as claimed in Claim 1.

6. A method as claimed in Claim 5, in which the polymer is as claimed in Claim 2.

7. A metod a claimed in Claim 5, in which the polymer is as claimed in Claim 3.

8. A method as claimed in Claim 5, in which the polymer is as claimed in Claim 4.

9. A method as claimed in any one of Claims 6 to 8, in which 1 to 100 mg/l of the polymer is added to the system.

10. A method as claimed in any one of Claims 6 to 9 in which the scale-forming salts are calcium carbonate and calcium phosphate.

**Claims for the following Contracting State: AT**

1. A method of inhibiting corrosion and the precipitation of scale-forming salts in an aqueous system, comprising adding to the system at least 0.1 mg/l of a polymer having an intrinsic viscosity of 0.05 to 4.5 dl/g in 1.0 M NaCl prepared from:
   (A) 35 to 65% by weight of acrylic acid or methacrylic acid;
   (B) 15 to 45% by weight of 2-acrylamido-2-methyl-propylsulphonic acid or 2-methacrylamido-2-methyl-propylsulphonic acid; and
   (C) 15 to 25% by weight of 2-acrylamido-2-methyl-propyl phosphonic acid or 2-methacrylamido-2-methyl-propyl phosphonic acid.

2. A method as claimed in Claim 1 in which 100 mg/l of the polymer is added to the system.

3. A method as claimed in Claim 2 in which the scale-forming salts are calcium carbonate and calcium phosphate.

4. A method as claimed in a previous claim in which polymer is prepared from acrylic acid, 2-acrylamido-2-methyl-propylsulphonic acid and 2-acrylamido-2-methyl-propyl phosphonic acid.

5. A method as claimed in Claim 5 in which the polymer is prepared from 40 to 60%, by weight, acrylic acid; 20 to 40%, by weight, 2-acrylamido-2-methylpropylsulphonic acid; and 15 to 25%, by weight, 2-acrylamido-2-methylpropyl phosphonic acid.

6. A method as claimed in a previous claim in which the polymer has an intrinsic viscosity of 0.05 to 2.5 dl/g, in 1.0 M NaCl.

**Revendications**

**Revendications pour les Etats contractants suivants: BE, CH, DE, FR, GB, IT, LI, LU, NL, SE**

1. Polymère ayant une viscosité intrinsèque de 0,05 à 4,5 dl/g dans NaCl 1,0M et préparé à partir de :
   (A) 35 à 65 % en poids d'acide acrylique ou d'acide méthacrylique ;

EP 0 218 351 B1

(B) 15 à 45 % en poids d'acide 2-acrylamido-2-méthylpropylsulfonique ou d'acide 2-méthacrylamido-2-méthylpropylsulfonique ; et
(C) 15 à 25 % en poids d'acide 2-acrylamido-2-méthylpropylphosphonique ou d'acide 2-méthacrylamido-2-méthylpropylphosphonique.

2. Polymère selon la revendication 1, préparé à partir d'acide acrylique, d'acide 2-acrylamido-2-méthylpropylsulfonique et d'acide 2-acrylamido-2-méthylpropylphosphonique.

3. Polymère selon la revendication 2, préparé à partir de 40 à 60 % en poids d'acide acrylique ; de 20 à 40 % en poids d'acide 2-acrylamido-2-méthylpropylsulfonique ; et de 15 à 25 % en poids d'acide 2-acrylamido-2-méthylpropylphosphonique.

4. Polymère selon l'une quelconque des revendications précédentes, possèdant une viscosité intrinsèque de 0,05 à 2,5 dl/g dans NaCl 1,0M.

5. Procédé d'inhibition de la corrosion et de la précipitation des sels formant du tartre dans un système aqueux, qui comprend l'addition au système d'au moins 0,1 mg/l d'un polymère selon la revendication 1.

6. Procédé selon la revendication 5, dans lequel le polymère est tel que revendiqué dans la revendication 2.

7. Procédé selon la revendication 5, dans lequel le polymère est tel que revendiqué dans la revendication 3.

8. Procédé selon la revendication 5, dans lequel le polymère est tel que revendiqué dans la revendication 4.

9. Procédé selon l'une quelconque des revendications 6 à 8, dans lequel on ajoute de 1 à 100 mg/l de polymère au système.

10. Procédé selon l'une quelconque des revendications 6 à 9, dans lequel les sels formant du tartre sont le carbonate de calcium et le phosphate de calcium.

**Revendications pour l'Etat contractant suivant: AT**

1. Procédé d'inhibition de la corrosion et de la précipitation des sels formant du tartre dans un système aqueux, qui comprend l'addition au système d'au moins 0,1 mg/l d'un polymère ayant une viscosité intrinsèque de 0,05 à 4,5 dl/g dans NaCl 1,0M, préparé à partir de :
(A) 35 à 65 % en poids d'acide acrylique ou d'acide méthacrylique ;
(B) 15 à 45 % en poids d'acide 2-acrylamido-2-méthylpropylsulfonique ou d'acide 2-méthacrylamido-2-méthylpropylsulfonique ; et
(C) 15 à 25 % en poids d'acide 2-acrylamido-2-méthylpropylphosphonique ou d'acide 2-méthacrylamido-2-méthylpropylphosphonique.

2. Procédé selon la revendication 1, dans lequel on ajoute 100 mg/l de polymère au système.

3. Procédé selon la revendication 2, dans lequel les sels formant du tartre sont le carbonate de calcium et le phosphate de calcium.

4. Procédé selon l'une quelconque des revendications précédentes, dans lequel on prépare le polymère à partir de l'acide acrylique, de l'acide 2-acrylamido-2-méthylpropylsulfonique et de l'acide 2-acrylamido-2-méthylpropylphosphonique.

5. Procédé selon la revendication 5, dans lequel on prépare le polymère à partir de 40 à 60 % en poids d'acide acrylique ; de 20 à 40 % en poids d'acide 2-acrylamido-2-méthylpropylsulfonique ; et de 15 à 25 % en poids d'acide 2-acrylamido-2-méthylpropylphosphonique.

11

6. Procédé selon l'une quelconque des revendications précédentes, dans lequel le polymère possède une viscosité intrinsèque de 0,05 à 2,5 dl/g dans NaCl 1,0M.

**Patentansprüche**

**Patentansprüche für folgende Vertragsstaaten: BE, CH, DE, FR, GB, IT, LI, LU, NL, SE**

1. Polymer mit einer Intrinsic-Viskosität von 0,05 bis 4,5 dl/g in 1,0 M NaCl, hergestellt aus:
   (A) 35 bis 65 Gew.-% Acrylsäure oder Methacrylsäure;
   (B) 15 bis 45 Gew.-% 2-Acrylamido-2-methylpropylsulfonsäure oder 2-Methacrylamido-2-methylpropylsulfonsäure;
   und
   (C) 15 bis 25 Gew.-% 2-Acrylamido-2-methylpropylphosphonsäure oder 2-Methacrylamido-2-methylpropylphosphonsäure.

2. Polymer nach Anspruch 1, hergestellt aus Acrylsäure, 2-Acrylamido-2-methylpropylsulfonsäure und 2-Acrylamido-2-methylpropylphosphonsäure.

3. Polymer nach Anspruch 2, hergestellt aus 40 bis 60 Gew.-% Acrylsäure, 20 bis 40 Gew.-% 2-Acrylamido-2-methylpropylsulfonsäure und 15 bis 25 Gew.-% 2-Acrylamido-2-methylpropylphosphonsäure.

4. Polymer nach einem der vorstehenden Ansprüche mit einer Intrinsic-Viskosität von 0,05 bis 2,5 dl/g in 1,0 M NaCl.

5. Verfahren zur Inhibierung von Korrosion und Ausfällung von ablagerungsbildenden Salzen in einem wässrigen System durch Zugabe von wenigstens 0,1 mg/l eines Polymers nach Anspruch 1 zu dem System.

6. Verfahren nach Anspruch 5, worin das Polymer Wie in Anspruch 2 beansprucht ist.

7. Verfahren nach Anspruch 5, Worin das Polymer wie in Anspruch 3 beansprucht ist.

8. Verfahren nach Anspruch 5, worin das Polymer wie in Anspruch 4 beansprucht ist.

9. Verfahren nach einem der Ansprüche 6 bis 8, worin dem System 1 bis 100 mg/l Polymer zugesetzt werden.

10. Verfahren nach einem der Ansprüche 6 bis 9, worin die Ablagerungen bildenden Salze Calciumcarbonat und Calciumphosphat sind.

**Patentansprüche für folgenden Vertragsstaat: AT**

1. Verfahren zur Verhinderung von Korrosion und der Ausfällung von Kesselstein bildenden Salzen in einem wäßrigen System, umfassend das Zusetzen zu dem System von mindestens 0,1 mg/l von einem Polymer mit einer Grenzviskosität von 0,05 bis 4,5 dl/g in 1,0M NaCl, welches aus:
   (A) 35 bis 65 Gew.-% Acrylsäure oder Methacrylsäure;
   (B) 15 bis 45 Gew.-% 2-Acrylamido-2-methyl-propylsulfonsäure oder 2-Methacrylamido-2-methyl-propylsulfonsäure; und
   (C) 15 bis 25 Gew.-% 2-Acrylamido-2-methyl-propylphosphonsäure oder 2-Methacrylamido-2-methyl-propylphosphonsäure
   hergestellt wird.

2. Verfahren nach Anspruch 1, worin 100 mg/l Polymer zu dem System zugesetzt werden.

3. Verfahren nach Anspruch 2, worin die Kesselstein bildenden Salze Calciumcarbonat und Calciumphosphat sind.

4. Verfahren nach einem der vorherstehenden Ansprüche, worin das Polymer aus Acrylsäure, 2-Acrylamido-2-methyl-propylsulfonsäure und 2-Acrylamido-2-methyl-propylphosphonsäure hergestellt wird.

5. Verfahren nach Anspruch 4, worin das Polymer aus 40 bis 60 Gew.-% Acrylsäure, 20 bis 40 Gew.-% 2-Acrylamido-2-methylpropylsulfonsäure und 15 bis 25 Gew.-% 2-Acrylamido-2-methylpropylphosphonsäure hergestellt wird.

6. Verfahren nach einem der vorherstehenden Ansprüche, worin das Polymer eine Grenzviskosität von 0,05 bis 2,5 dl/g in 1,0M NaCl besitzt.